# EUROPEAN PATENT APPLICATION

(11) **EP 4 470 996 A1**
(43) Date of publication of application: **04.12.2024**
(21) Application number: 23176518.1
(22) Date of filing: 31.05.2023
(51) Int. Cl.: C05C 9/00, C05C 11/00, C05D 9/02, C05F 11/00, C05F 11/08, C05G 3/50, C05G 3/80, C05G 5/23, C05G 5/27, C05G 5/30, C05G 5/40, A01N 25/28, C05G 3/40, C05G 5/10, C05G 5/35

(54) **NANOPARTICLE FERTILIZER COMPOSITION**

(71) Applicant: Sabic Agri-Nutrients Company, 2871 Riyadh (SA)
(72) Inventor: SHARMA, Yogesh Omprakash, 11551 Riyadh (SA); MARKANDAY, Meghna, 562125 Bangalore (IN); GUPTA, Samik, 562125 Bangalore (IN); UMAPATHI, Mallesh Kenchamanahalli, 562125 Bangalore (IN)
(74) Representative: J A Kemp LLP

(57) **Abstract**

A nanoparticle fertilizer composition comprising nitrogen fertilizer, a micronutrients and methods for producing and using the same are disclosed. The nanoparticle fertilizer composition may include urea as the nitrogen fertilizer and copper, manganese, silicon, and potassium as the micro-nutrients are encapsulated within at least one carrier. The carrier can comprises chitosan crosslinked with tripolyphosphate. The nanoparticle fertilizer composition may also include plant growth promoter.

## Description

### BACKGROUND OF THE INVENTION

### A. Field of the Invention

This invention is in the field of nanoparticle fertilizers. Generally, it concerns a nanoparticle foliar fertilizer composition that includes a nitrogen fertilizer and micronutrients which are encapsulated within a carrier.

### B. Description of Related Art

With the increase in global population, demand for food is ever increasing. To meet the growing demand, agricultural crop yields should be dramatically increased. Fertilizer is one of the major factors which contributes to high crop yields. Fertilizers are chemical compositions that are added to plants, soil, and/or water in order to provide nutrients that promote growth. Nitrogen (N), phosphorus (P), and/or potassium (K) are present in many fertilizers, as these three primary nutrients play key roles in plant nutrition and growth. However, a major problem associated with conventionally used nitrogen and phosphorus fertilizers is their poor nutrient use efficiency (NUE).

Nitrogen is essential for the formation of proteins, and proteins make up a significant portion of most living tissues. However, a significant portion of nitrogen fertilizer is lost once applied to soil, up to 70 %, due to leaching, volatilization to ammonia and nitrogen oxide, and long-term incorporation into soil organic matter. Further, commonly used soil application fertilizers have a slow intake into plants and intake depends on soil and plant root health. Thus, if poor root health or slow intake can increase the amount of nitrogen, and other nutrients, that are lost before intake into a plant. The loss of nitrogen from nitrogen fertilizers induces use of excess nitrogen fertilizer compared to the requirements of the plants. The production, distribution, and application of the excess amount of nitrogen fertilizers significantly contributes to the carbon footprint of the fertilizer industry. However, the NUE of nitrogen fertilizers has been improved by using slow and sustained release fertilizers such as ureananoparticle composites, urea composites, polymer coated urea, etc.

Most existing fertilizers predominantly provide N, P, and/or K for addressing the nutrition aspects of plant growth and development. Many existing fertilizers neglect the impact of abiotic and biotic stress in plants on yield loss. Yield building factors and yield protecting factors can help address these stressors and contribute to proper growth and better yield of plants. Very often biotic and abiotic stress managing factors are separately applied to crops apart from fertilizers applied to soil, or biotic and abiotic stress managing factors are mixed at the point of application. However, many farmers may not have sufficient information on use and selection of these stress management additives for use with or without additional nutrient fertilizers.

### SUMMARY OF THE INVENTION

A solution to at least some of the problems discussed above has been discovered. A nanoparticle fertilizer composition is disclosed herein that utilizes a nitrogen fertilizer component and a micronutrient component and at least one carrier component. Both the nitrogen fertilizer component and the micronutrient component are embedded in a carrier. The carrier can be at least partially cross linkable. The micronutrients can be abiotic and biotic stress reducing nutrients. The nanoparticle fertilizer in some instances can be applied to a plant by foliar application. The disclosed nanoparticle fertilizer provides multiple advantages over conventional fertilizers. For example, foliar application of the nanoparticle fertilizer may ensure quick uptake by plants independent of root and soil health and may reduce nutrient losses associated with soil tie up and leaching of the nutrients. The nano size of the nanoparticle fertilizer may enhance nutrients uptake through stomatal openings of plants. Further, the abiotic and biotic stress reducing micronutrients may improve the yield and quality of a plant. In addition, the combination of crop yield building factors (nutrients such as nitrogen) as well as crop protecting components (biotic and abiotic stress management micronutrients) in a single nanoparticle fertilizer increases the simplicity and efficiency of supplying a plant with needed nutrients and micronutrients. Further, some micronutrients can have dual functions as a crop nutrients as well as a crop protectant from biotic and/or abiotic stress.

One aspect of the present invention is directed to nanoparticle fertilizer compositions. The nanoparticle fertilizer compositions may contain a nitrogen fertilizer, micronutrients, and a carrier. The nitrogen fertilizer may include nano urea, nano nitrogen (N) and phosphorus (P) and potassium (K) fertilizers (NPK), NP fertilizers, NK fertilizers, or a combination thereof. The micronutrients may include Cu, Mn, Si, K, and/or combinations thereof. The carrier may include chitosan, crosslinked chitosan, a gum, a carbohydrate, an inorganic nano porous material, and/or combinations thereof. In several aspects, the nanoparticle fertilizer is a nanoparticle having a nanoscale diameter. In several aspects, the nanoparticle comprises, consists of, or consists essentially of one or more of a nitrogen fertilizer component (e.g., a urea, NPK, and/or any other macronutrient fertilizer component), a micronutrient component (e.g., Cu, Mn, Si, K, boron, chlorine, iron, molybdenum, silicate, zinc, and/or any other micronutrient component), a carrier component (e.g., chitosan, crosslinked chitosan, a gum, a carbohydrate, an inorganic nano porous material, and/or any other micronutrient component), a surfactant, and/or water.

In some aspects, the carrier may include chitosan crosslinked with tripolyphosphate (TPP). In some aspects, the inorganic nano porous carrier material may include zeolite, biochar, hydroxyapatite, and/or combinations thereof. In some aspects, micronutrients may include Cu, Mn, Si, K. In some aspects, the micronutrients also include boron, chlorine, iron, molybdenum, silicate, zinc, and/or combinations thereof. In some aspects, the nanoparticle fertilizer composition may also include phosphorous, potassium, or combinations thereof.

In some aspects, the nanoparticle fertilizer composition may include a plant growth promoter, wherein the plant growth promoter may include enzymes, seaweed extracts, plant extracts, proteins, amino acids, micro-organisms, innoculants, bioinnoculants, salicylic acid, humic acids, biostimulants, plant growth hormones, fulvic acids, protein hydrolases, and/or combinations thereof.

In some aspects, the nanoparticle fertilizer composition further contains at least one surfactant. In some instances, the surfactants may include Tween 80 (polysorbate 80, polyoxyethylene sorbitan monooleate). In some aspects, the surfactant may include nonionic surfactants. In some instances, nonionic surfactants can also be used as a stabilizer.

In some aspects, the nanoparticle fertilizer composition is in the form of a liquid, powder, prill, granule, and/or pellet. In some aspects, the nanoparticle comprises, consists of, or consists essentially of nanoparticles having an average diameter size ranging from about 25 nm to about 300 nm. In several aspects, the nano particle composition is provided as a liquid/solution form. In several aspects, the powder is configured to be reconstituted in water to provide an aqueous solution. In several aspects, upon reconstitution, nanoparticles within the aqueous solution have an average diameter size ranging from about 25 nm to about 300 nm, or any range or number therein.

Several aspects pertain to a method of making a nanoparticle for a fertilizer application. In several aspects, the method comprises providing a nitrogen fertilizer, a micronutrient component, and/or a carrier component. In several aspects, the method further comprises providing a plant growth promoter component. In several aspects, the method comprises combining the nitrogen fertilizer and the micronutrient in an aqueous solution with a carrier in an another aqueous solution, and a surfactant, and stirring to form a nanoparticle. In some instances, the nanoparticle is the nanoparticle fertilizer disclosed herein. In several aspects, the method further comprising crosslinking the carrier in the presence of the nitrogen fertilizer and the micronutrient. In several aspects, the method forms a nanoparticle at least partially encapsulating the nitrogen fertilizer and the micronutrient with the carrier. In particular aspects, the method may include crosslinking the carrier, such as chitosan, with TPP. In several aspects, the method may include drying the nanoparticle and/or reducing the volume of the aqueous solution.

Some aspects pertain to a method of fertilizing, the method comprising contacting a soil, a plant, or a soil and a plant with the nanoparticle fertilizer composition as disclosed above and/or anywhere else herein. In several aspects, the method of fertilizing further comprises adding water to the nanoparticle fertilizer to form a dilute solution for application. In several aspects, nanoparticle fertilizer, or dilute solution thereof, is sprayed on the soil, the plant, or the soil and the plant. In some aspects, the nanoparticle fertilizer, or dilute solution thereof, is sprayed on plant leaves (e.g., foliar application).

The following includes definitions of various terms and phrases used throughout this specification.

The term "fertilizer" is defined as a material applied to soils or to plant tissues to supply one or more plant nutrients essential or beneficial to the growth of plants and/or stimulants or enhancers to increase or enhance plant growth. Non-limiting examples of fertilizers include materials having one or more of urea, ammonium nitrate, calcium ammonium nitrate, urea calcium sulfate adduct, one or more superphosphates, binary NP fertilizers, binary NK fertilizers, binary PK fertilizers, NPK fertilizers, molybdenum, zinc, copper, boron, cobalt, and/or iron. In some aspects, fertilizers include agents that enhance plant growth and/or enhance the ability for a plant to receive the benefit of a fertilizer, such as, but not limited to biostimulants, urease inhibitors, and nitrification inhibitors.

The term "nutrient" is defined as a chemical element or substance used for the normal growth and development of a plant. Non-limiting examples of nutrients include N, P, K, Ca, Mg, S, B, Cu, Fe, Mn, Mo, Zn, Se, and Si or compounds thereof.

The term "granule" can include a solid material. A granule can have a variety of different shapes, non-limiting examples of which include a spherical, a puck, an oval, a rod, an oblong, or a random shape. The term "prill" refers to a solid globule of a substance formed by the congealing of a liquid. The term "pellet" refers to a rounded, compressed mass of fertilizer. The term "powder" refers to dry particles produced by the grinding, crushing, precipitating, or disintegration of a fertilizer composition.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%," "vol.%," or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification, includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include"), or "containing" (and any form of containing, such as "contains" and "contain") are inclusive or open-ended and do not exclude additional, unrecited elements or method steps.

The nanoparticle fertilizer composition and methods of producing the nanoparticle fertilizer composition of the present invention can "comprise," "consist essentially of," or "consist of" particular ingredients, components, compositions, steps, etc. disclosed throughout the specification

### BRIEF DESCRIPTION OF THE DRAWINGS

Advantages of the present invention may become apparent to those skilled in the art with the benefit of the following detailed description and upon reference to the accompanying drawings. While the invention is susceptible to various modifications and alternative forms, specific embodiments thereof are shown by way of example in the drawings. The drawings may not be to scale.
**FIGs. 1A-1D FIG. 1A** A TEM image of nano-chitosan carrier according to one example of the present invention. **FIG. 1B** A TEM image of formation of nano urea using chitosan template according to one example of the present invention. **FIGS. 1C** and **1D** A XRF image of formation of nanoparticle fertilizer according to one example of the present invention.
**FIG. 2** a flowchart for method of making a nanoparticle fertilizer according to one example of the present invention.
**FIG. 3** A growth improvements study on marigold plant (greenhouse trails) using the nanoparticle fertilizer composition according to one example of the present invention.
**FIG. 4** A growth improvements study on marigold plant (greenhouse trails) using the nanoparticle fertilizer composition according to one example of the present invention.
**FIGS. 5A-5B** A growth improvements study on marigold plant (greenhouse trails) using the nanoparticle fertilizer composition according to one example of the present invention.
**FIGS. 6A-6C** An yield improvements study on maize plant (open field trails) using the nanoparticle fertilizer composition according to one example of the present invention.

### DETAILED DESCRIPTION OF THE INVENTION

The nanoparticle fertilizer composition of the present invention may include a nitrogen fertilizer, micronutrients, and a carrier. The nitrogen fertilizer may include nano urea. The micronutrients may include Cu, Mn, Si, K, and/or combinations thereof. The carrier may include a crosslinked carrier, chitosan, crosslinked chitosan, a gum, a carbohydrate, and/or inorganic nano porous materials. In some instances, the nanoparticle fertilizer may include both the nitrogen fertilizer and the micronutrients embedded in the carrier. In some instances, the nitrogen fertilizer and the micronutrients are embedded in a crosslinked carrier. Foliar application of the nanoparticle fertilizer may ensure quick uptake by plants independent of root and soil health and may reduce nutrient losses associated with soil tie up and leaching of the nutrients. The nano size of the nanoparticle fertilizer may enhance nutrients uptake through the stomatal openings of plants. Further, the abiotic and biotic stress reducing micronutrients may improve the yield and quality of a plant. In addition, the combination of crop yield building factors (nutrients such as nitrogen) as well as crop protecting components (biotic and abiotic stress management micronutrients) in a single nanoparticle fertilizer increases the simplicity and efficiency of supplying a plant with needed nutrients and micronutrients. Further, some micronutrients can have dual functions as a crop nutrients as well as a crop protectant from biotic and/or abiotic stress.

These and other non-limiting aspects of the present invention are discussed in further detail in the following sections.

### A. Nanoparticle Fertilizer Compositions

The nanoparticle fertilizer composition can contain crop yield building ingredients such as macronutrients, crop protecting ingredients such as abiotic or biotic stress relieving agents like dual role micronutrients, both encapsulated in a carrier. In some aspects, the macronutrients can contain nano urea and/or nano NPK. In some aspects, the micronutrients can include Cu, Mn, Si, and/or K. In some aspects, the nanoparticle fertilizer can contain nano urea enriched with micro nutrients. In some aspects, the carrier may be chitosan, crosslinked chitosan, a gum, a carbohydrate, inorganic nano porous materials, and/or combinations thereof. In some aspects, a inorganic nano porous material carrier may include zeolite, biochar, hydroxyapatite, and/or combinations thereof.

In certain aspects, the carrier can be chitosan crosslinked with tripolyphosphate (TPP), chitosan, and/or combinations thereof. In certain aspects, the degree of crosslinking between the chitosan and TPP may be at least any one of, at most any one of, equal to any one of, or between any two of 5, 10, 15, 20, 25, 30, 35, 40, 45, 50, 55, 60, 65, 70, 75, 80, 85, 90, 95, 99, or 100 %.

In some aspects, the nanoparticle fertilizer composition may also contain surfactant to stabilize the nanoparticle. In some aspects, surfactants may include nonionic surfactants and/or Tween 80 (polysorbate 80, polyoxyethylene sorbitan monooleate). In some aspects, the nonionic surfactants are used as a stabilizer.

In certain aspects, the nanoparticle fertilizer may include additional micronutrients such as boron, chlorine, iron, molybdenum, silicate, zinc, and/or combinations thereof. In certain aspects, nanoparticle fertilizer can further contain the plant growth promoters such as enzymes, seaweed extracts, plant extracts, proteins, amino acids, micro-organisms, innoculants, bio-innoculants, salicylic acid, humic acids, bio-stimulants, plant growth hormones, fulvic acids, protein hydrolases, or combinations thereof.

In some aspects, the nanoparticle fertilizer can contain 5 wt. % to 20 wt. % of the macronutrients, e.g., the nanoparticle is comprised of 5 wt. % to 15 wt. % or at least any one of, at most any one of, equal to any one of, or between any two of 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. % , and 20 wt. % of the nano fertilizer, such as urea or NPK, or a combination of nano fertilizers. In some aspects, the nanoparticle fertilizer is comprised of 0.1 wt. % to 5 wt. % of the micronutrients or at least any one of, at most any one of, equal to any one of, or between any two of 0.1 wt. %, 0.5 wt. %, 1 wt. %, 1.5 wt. %, 2 wt. %, 2.5 wt. %, 3 wt. %, 3.5 wt. %, 4 wt. %, 4.5 wt. %, or 5 wt. % of a micronutrient or a combination of micronutrients. In some aspects, the nanoparticle fertilizer contains 0.1 wt. to 5 wt. % or at least any one of, at most any one of, equal to any one of, or between any two of 0.1 wt. %, 0.5 wt. %, 1 wt. %, 1.5 wt. %, 2 wt. %, 2.5 wt. %, 3 wt. %, 3.5 wt. %, 4 wt. %, 4.5 wt. %, or 5 wt. % of a carrier or combination of carriers. In some aspects, the nanoparticle fertilizer can contain 70 wt. % to 95 wt. % or at least any one of, at most any one of, equal to any one of, or between any two of 70 wt. %, 75 wt. %, 80 wt. %, 85 wt. %, 90 wt. %, or 95 wt. %, of water.

In some aspects, the nanoparticle fertilizer does not contain or is substantially free of a binder, filler, pH buffer, urease inhibitor, and/or nitrification inhibitor.

### B. Forms of Nanoparticle Fertilizer composition

The nanoparticle can be of any suitable shape. Non-limiting shapes include spherical, cuboidal, cylindrical, puck shape, oval, and oblong shapes. In some aspects, the nanoparticle can be of cylindrical shape with a circular, elliptical, ovular, triangular, square, rectangular, pentagonal, or hexagonal cross section, although cylindrical shaped core having a cross-section of other shapes can also be made. In some aspects, the nanoparticle fertilizer composition is in the form of a liquid, powder, prill, granule, and/or pellet. In some aspects, the nanoparticle comprises, consists of, or consists essentially of nanoparticles having an average diameter size ranging from about 25 nm to about 300 nm, from about 20 nm to about 500 nm, from about 25 nm to about 110 nm, from about 50 nm to about 250 nm, 20 nm to about 350 nm, or any range or number therein. In several aspects, the nanoparticle composition is provided as a solution. In several aspects, the nanoparticle solution is diluted in water to provide a desired concentration of nutrients in an aqueous solution. In several aspects, upon reconstitution, nanoparticles within the aqueous solution have an average diameter size ranging from about 25 nm to about 300 nm, from about 25 nm to about 110 nm, from about 20 nm to about 500 nm, from about 50 nm to about 250 nm, 20 nm to about 350 nm, or any range or number therein.

In some aspects, nanoparticles in solution, or as a dry particle, have an average diameter size of any one of, less than, greater than, between, or any range thereof of 20, 30, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, 200, 201, 202, 203, 204, 205, 206, 207, 208, 209, 210, 211, 212, 213, 214, 215, 216, 217, 218, 219, 220, 221, 222, 223, 224, 225, 226, 227, 228, 229, 230, 231, 232, 233, 234, 235, 236, 237, 238, 239, 240, 241, 242, 243, 244, 245, 246, 247, 248, 249, 250, 251, 252, 253, 254, 255, 256, 257, 258, 259, 260, 261, 262, 263, 264, 265, 266, 267, 268, 269, 270, 271, 272, 273, 274, 275, 276, 277, 278, 279, 280, 281, 282, 283, 284, 285, 286, 287, 288, 289, 290, 291, 292, 293, 294, 295, 296, 297, 298, 299, 300, 301, 302, 303, 304, 305, 306, 307, 308, 309, 310, 311, 312, 313, 314, 315, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 348, 349, 350 nm.

The nanoparticle of the fertilizer can have a nitrogen content of 100 ppm to 100000 ppm. In some instances, the nanoparticle of the fertilizer contains a nitrogen content of any one of, less than, greater than, between, or any range thereof of 100, 200, 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, 4000, 4100, 4200, 4300, 4400, 4500, 4600, 4700, 4800, 4900, 5000, 5100, 5200, 5300, 5400, 5500, 5600, 5700, 5800, 5900, 6000, 6100, 6200, 6300, 6400, 6500, 6600, 6700, 6800, 6900, 7000, 7100, 7200, 7300, 7400, 7500, 7600, 7700, 7800, 7900, 8000, 8100, 8200, 8300, 8400, 8500, 8600, 8700, 8800, 8900, 9000, 9100, 9200, 9300, 9400, 9500, 9600, 9700, 9800, 9900, 10000, 11000, 12000, 13000, 14000, 15000, 16000, 17000, 18000, 19000, 20000, 21000, 22000, 23000, 24000, 25000, 26000, 27000, 28000, 29000, 30000, 31000, 32000, 33000, 34000, 35000, 36000, 37000, 38000, 39000, 40000, 41000, 42000, 43000, 44000, 45000, 46000, 47000, 48000, 49000, 50000, 51000, 52000, 53000, 54000, 55000, 56000, 57000, 58000, 59000, 60000, 61000, 62000, 63000, 64000, 65000, 66000, 67000, 68000, 69000, 70000, 71000, 72000, 73000, 74000, 75000, 76000, 77000, 78000, 79000, 80000, 81000, 82000, 83000, 84000, 85000, 86000, 87000, 88000, 89000, 90000, 91000, 92000, 93000, 94000, 95000, 96000, 97000, 98000, 99000, 100000 ppm, such as about 40000.

In some instances, the nanoparticle of the fertilizer can have a micronutrient content of 5 ppm to 40000 ppm. In some instances, the nanoparticle of the fertilizer contains a micronutrient content of any one of, less than, greater than, between, or any range thereof of 5, 10, 20, 30, 40, 50, 60, 70, 80, 90, 100, 200, 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, 4000, 4100, 4200, 4300, 4400, 4500, 4600, 4700, 4800, 4900, 5000, 5100, 5200, 5300, 5400, 5500, 5600, 5700, 5800, 5900, 6000, 6100, 6200, 6300, 6400, 6500, 6600, 6700, 6800, 6900, 7000, 7100, 7200, 7300, 7400, 7500, 7600, 7700, 7800, 7900, 8000, 8100, 8200, 8300, 8400, 8500, 8600, 8700, 8800, 8900, 9000, 9100, 9200, 9300, 9400, 9500, 9600, 9700, 9800, 9900, 10000, 11000, 12000, 13000, 14000, 15000, 16000, 17000, 18000, 19000, 20000, 21000, 22000, 23000, 24000, 25000, 26000, 27000, 28000, 29000, 30000, 31000, 32000, 33000, 34000, 35000, 36000, 37000, 38000, 39000, 40000 ppm, such as about 12500 ppm.

In some instances, the nanoparticle of the fertilizer is added to water before being applied to a plant and/or soil to dilute the concentration of nitrogen to 50 ppm to 500 ppm in the solution. In some instances, the solution contains a nitrogen content of any one of, less than, greater than, between, or any range thereof of 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500 ppm, such as about 160 ppm. In some instances, the solution can have a micronutrient content of 5 ppm to 300 ppm. In some instances, the solution contains a micronutrient content of any one of, less than, greater than, between, or any range thereof of 5, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300 ppm, such as about 50 ppm.

The nanoparticle of the fertilizer can be in the form of a powder/granule and can have desirable physical properties such as desired levels of abrasion resistance, granule strength, pelletizability, hygroscopicity, granule shape, and size distribution.

The nanoparticle fertilizer described herein can be comprised in a composition useful for application to plant, soil, or plant and soil. In addition to the nanoparticle fertilizer, the composition may include other fertilizer compounds, micronutrients, primary nutrients, additional urea, additional nitrogen nutrients, insecticides, herbicides, or fungicides, or combinations thereof.

The nanoparticle fertilizer described herein can also be included in a blended composition comprising other fertilizers. The other fertilizers can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

### C. Method of Making a Nanoparticle Fertilizer Compositions

One aspect of the present invention is directed to a method for making a nanoparticle fertilizer, such as a nanoparticle fertilizer disclosed herein. In certain aspects, dilute acid solution containing the chitosan carrier can be provided with, such as combining on, nitrogen fertilizer and micro nutrients which are in aqueous solution. The obtained solution may be crosslinked, such as with tripolyphosphate (TPP) dissolved in ultrapure water to generate TPP/Chitosan polyelectrolyte complex/ nanoparticles.

In certain aspects, the method can include providing an aqueous solution of nano urea as a nitrogen fertilizer and Cu, Mn, Si, K are as micronutrients along with a surfactant to a dilute acidic solution containing a chitosan carrier. The resulted solution may be crosslinked, such as with TPP, to generate TPP/Chitosan polyelectrolyte complex/ nanoparticles.

In some aspects, NPK can be provided as a macronutrient. In some instances NPK can be provided by contacting the NPK and micronutrients with the chitosan carrier and crosslinking with TPP. In some aspects, other micronutrients such as boron, chlorine, iron, molybdenum, silicate, zinc can be included along with the chosen macronutrient when combined with dilute acid solution containing a carrier. In some aspects, a surfactant can be included along with macro and micronutrients before combining with the carrier solution. In certain aspects, a solution containing the carrier can be contacted with, such as sprayed on, the outer surface of a nitrogen fertilizer and micronutrients mixture, followed by a crosslinking step.

In some aspects, the acid solution used for dissolving a carrier contains acetic acid, phosphoric acid, a weak acid, and/or combinations thereof. In some aspects the acid solution can be an aqueous solution containing 1 wt. % to 5 wt. % or at least any one of, at most any one of, equal to any one of, or between any two of 1 wt. %, 1.5 wt. %, 2 wt. %, 2.5 wt. %, 3 wt. %, 3.5 wt. %, 4 wt. %, 4.5 wt.%, and 5.0 wt. % of the acid. In some aspects TPP was used as a crosslinker. In some aspects the TPP solution can be an aqueous solution containing 0.5 wt. % to 2.5 wt. %, or at least any one of, at most any one of, equal to any one of, or between any two of 0.5 wt. %, 1 wt. %, 1.5 wt. %, 2.0 wt. %, or 2.5 wt. % of the TPP.

In some aspects, a method of making the nanoparticle fertilizer can include additional nutrients such as phosphorous, potassium, plant growth promotors, bio-stimulants and/or combinations thereof in one or more of the solutions used to produce the nanoparticle fertilizer.

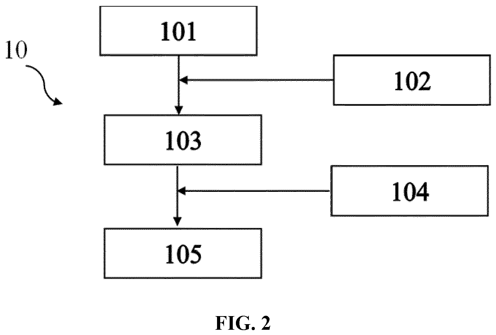

FIG. 2 shows a flow chart of a method **100** for making a nano fertilizer composition according to one example of the present invention. Referring to FIG. 2, a carrier in dilute solution **101** can be combined with a solution containing micro and micronutrients **102** to form associated complex of macro and micronutrients with carrier **103**, the associated complex **103** can optionally be combined with crosslinker containing solution **104** to form an encapsulated macro and micronutrients with crosslinked nanocarrier, upon stirring it forms a nanoparticle fertilizer **105.**

The macronutrients may include nano urea, nano NPK, the micronutrients may include Cu, Mn, Si, K, boron, chlorine, iron, molybdenum, silicate, zinc and/or a combination thereof. The carrier can include chitosan, crosslinked chitosan, a gum, a carbohydrate, and/or inorganic nano porous materials. In some aspects, surfactant are also included in one or more of the solutions.

The macronutrients and micronutrients can be contacted in the presence of water to form a slurry/homogenized solution. In certain aspects, macronutrient urea is in the form of a urea solution, urea nanoparticles, urea granules, or urea prills, or any combination thereof and can be contacted with the micronutrients to form the slurry/homogenized solution. In some aspects, the macronutrients solution contacted with the micronutrients can contain 10 wt. % to 40 wt. % or at least any one of, at most any one of, equal to any one of, or between any two of 10 wt. %, 15 wt. %, 20 wt. %, 25 wt. %, 30 wt. %, 35 wt. %, and 40 wt. % of micronutrients. In some aspects, micronutrients having 2 wt. % to 30 wt. % or at least any one of, at most any one of, equal to any one of, or between any two of 2 wt. %, 5 wt. %, 10 wt. %, 15 wt. %, 20 wt. %, 25 wt. %, and 30 wt. % of micronutrients can be contacted with a composition containing water and macronutrients to form the slurry/homogenized solution of macro and micronutrients. In some aspects, the slurry/homogenized solution of macro and micronutrients can contain 10 wt. % to 40 wt. % or at least any one of, at most any one of, equal to any one of, or between any two of 10 wt. %, 15 wt. %, 20 wt. %, 25 wt. %, 30 wt. %, 35 wt. %, and 40 wt. %, of macro and micronutrients. Macronutrients can be contacted with micronutrients at molar ratio of 3:1 to 7:1 or at least any one of, at most any one of, equal to any one of, or between any two of 3:1, 3.5:1, 4:1, 4:5:1, 5:1, 5.5:1, 6:1, 6:5:1, and 7:1 of macronutrients to micronutrients. In some aspects, the macronutrients (e.g., nano urea) and micronutrients can be contacted at 40 °C to 90 °C, or at least any one of, at most any one of, equal to any one of, or between any two of 40 °C, 45 °C, 50 °C, 55 °C, 60 °C, 65 °C, 70 °C, 75 °C, 80 °C, 85 °C, and 90 °C.

In some aspects, a carrier having 2 wt. % to 30 wt. % or at least any one of, at most any one of, equal to any one of, or between any two of 2 wt. %, 5 wt. %, 10 wt. %, 15 wt. %, 20 wt. %, 25 wt. % and 30 wt. % of carrier in water can be contacted with the slurry/homogenized solution of macro and micronutrients to form an encapsulated macro and micronutrients with an optionally cross linkable carrier complex.

In certain aspects, the encapsulated complex can be heated and/or dried at 35 °C, 40 °C, 45 °C, 50 °C, 55 °C, 60 °C, 65 °C, 70 °C, 75 °C, 80 °C, 85 °C, 90 °C, 95 °C, 100 °C or greater, or any temperature or range thereof or there between to reduce the volume of the resulting nanoparticle fertilizer solution or to form a nanoparticle fertilizer powder/granule. The amount of water, e.g., moisture, in the dried nanoparticle fertilizer powder/granule can be less than 0.6 wt.%, 0.5 wt.%, 0.4 wt.%, 0.3 wt.%, 0.2 wt.%, 0.1 wt.%, or less, or any amount or range thereof or there between. In several aspects, the formed nanoparticle fertilizer powder has an average diameter size ranging from about 20 nm to about 500 nm.

### D. Method of Using the Nanoparticle Fertilizer Composition

The nanoparticle fertilizer composition of disclosed herein can be used in methods of increasing the amounts of nitrogen and micronutrients and other nutrients in plant and soil for enhancing plant growth. Such methods may include spraying on plant, and/or applying to the soil an effective amount of a composition comprising the nanoparticle fertilizer composition disclosed herein. The method may include increasing the growth and yield of crops, trees, ornamentals, *etc.* such as, for example, Gazania, Maize (open field studies), Marigold (Green house studies), palm, coconut, rice, wheat, corn, barley, oats, and soybeans. The method may include applying the nanoparticle fertilizer composition disclosed herein to at least one of a plant, a soil, an organism, a liquid carrier, a liquid solvent, *etc.*

Non-limiting examples of plants that may benefit from the nanoparticle fertilizer disclosed herein include vines, trees, shrubs, stalked plants, ferns, *etc.* The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

The effectiveness of compositions comprising the nanoparticle fertilizer composition disclosed herein may be ascertained by measuring the amount of growth such as plant height, number of branches, total number of flowers and buds, kernel and stover yields, cob length, and number of seed at various times after applying the nanoparticle fertilizer composition to plants. The effectiveness of the nanoparticle fertilizer composition may also be directly compared to other fertilizer compositions by doing a side-by-side comparison in the same soil under the same conditions.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

### Producing a Nanoparticle Fertilizer

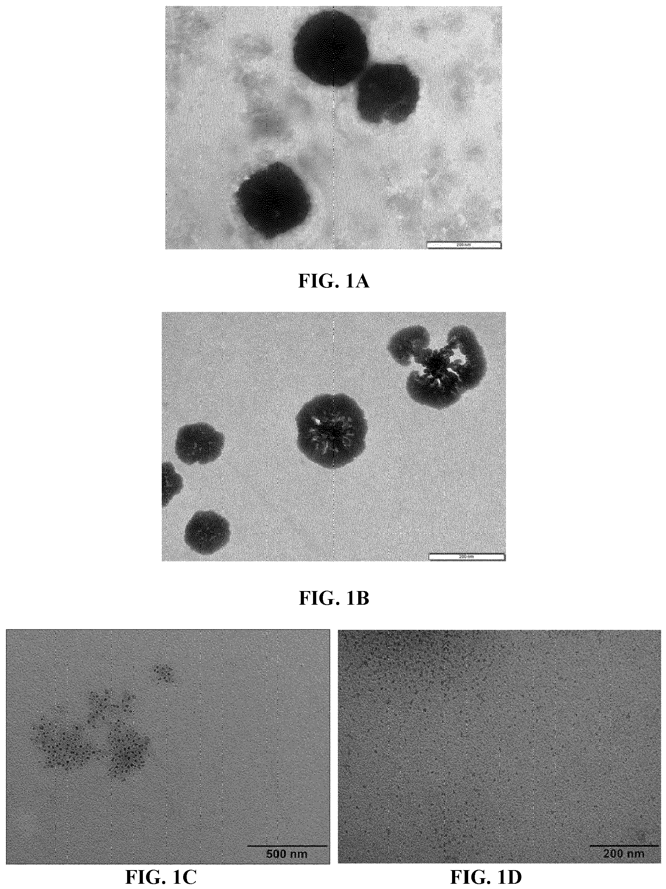

A nano carrier such as chitosan powder from Sigma Aldrich with a 75-85% degree of acetylation was used as received. A chitosan solution was prepared by dissolving chitosan in 1% - 1.5% (w/v) acetic acid solution until the solution was transparent. The solution was stirred overnight at room temperature to ensuring complete dissolution and homogenization of chitosan. The pH of the resulting solution was measured and adjusted to 4.7-4.8 using a 20 wt.% aqueous sodium hydroxide solution. The chitosan solution was then passed through a syringe filter (pore size 0.22-0.45 µm, Millipore, USA). Nano-chitosan formed was seen as well-defined spherical particles with spongy morphology by TEM imaging (see FIG. 1A). Alternate carriers such as a gum, or inorganic carrier like nano zeolite or hydroxy apatite can be used instead of, or in addition to nano-chitosan.

Macro, micronutrients, and optionally biostimulants were added to the above solution and stirred overnight at room temperature to ensuring complete dissolution and homogenization. For some components with poor miscibility in water, such as some biostimulants, they were first dissolved in a minimum quantity of ethanol and subsequently added to the solution. Upon addition of urea to the above prepared chitosan solution, spherulite-like features radiating from the center to a periphery were formed. TEM imaging (see FIG. 1B) showed the formation of nano-urea chitosan. Stabilizers such as Tween 80 (polysorbate 80, polyoxyethylene sorbitan monooleate) were added.

TPP was dissolved in ultrapure water at a concentration of 1% w/v and also passed through a syringe filter (pore size 0.22 µm, Millipore, USA). The TPP was added to the chitosan, macronutrient, micronutrient, and stabilizer solution (CMMS solution) above. Nanoparticles were synthesized by ionic gelation method via the interaction with TPP. Briefly, 2.4 mg/mL TPP solution was prepared separately, and 3.0 mL was added to 10.0 mL of CMMS solution with a dripping rate of 60.0 mL/h. The formation of nanoparticles starts spontaneously via the initiation of ionic gelatin mechanism induced by TPP. The solution was stirred continuously at 700-1000 rpm using a stirring bar for 10-15 min to form a nanoparticle suspension. TEM imaging (see FIGs. 1C and 1D) confirmed the formation of a nanoparticle fertilizer. The nanoparticle suspension was gently stirred for 60 min at 20 ± 2 °C before being subjected to further analysis and applications.

### Example 2

### Characterization of a Liquid Nanoparticle Fertilizer

An elemental analysis was performed to characterize the raw ingredients presence in final products. For example elemental analysis was conducted on prepared nano urea (NFF 001), nano NPK (NFF 002), a nanoparticle of Example 1 containing nano urea and biotic and abiotic stress managing micronutrients (NFF 003), and a nanoparticle of Example 1 containing nano urea, biotic and abiotic stress managing micronutrients, and a biostimulant (NFF 004) samples. As can be seen in Table 1, the nanoparticles of NFF 003 and NFF 004 samples provide more iron, zinc, and copper micronutrients than either of nano urea (NFF 001) or nano NPK (NFF 002) samples.

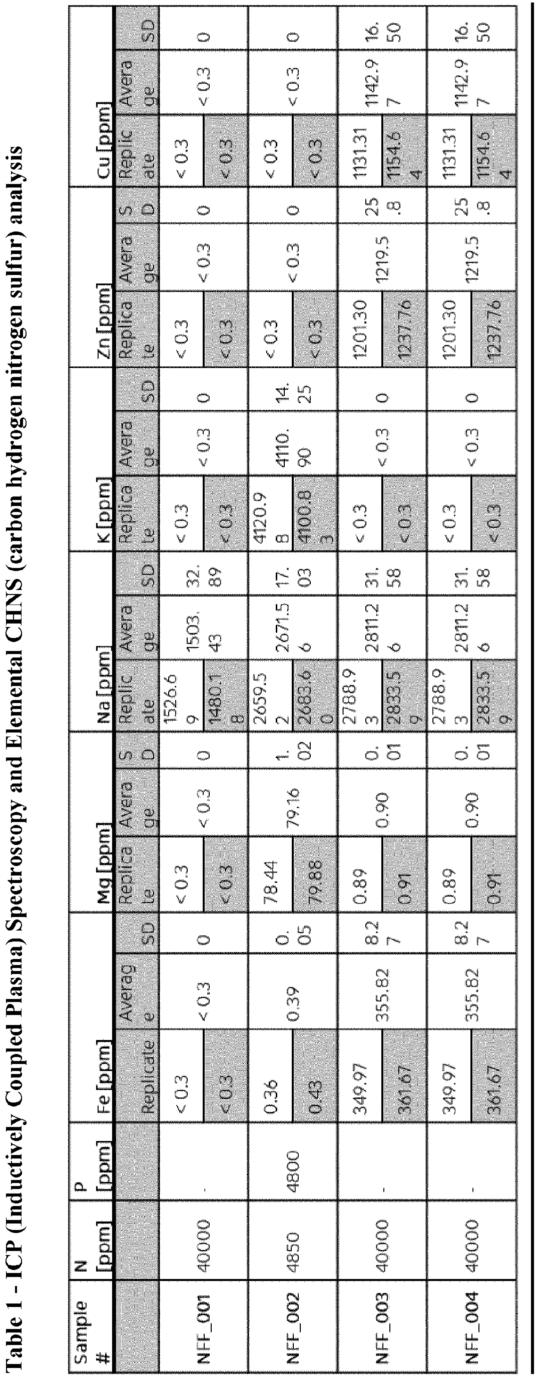

### Example 3

### Comparison for Bulk vs Nano Size Application of Fertilizers in Open Field Trials

Open field trials were performed with maize crop using a nano chitosan based nano fertilizer of Example 1(Nano CS Foliar) compared to bulk chitosan based fertilizer (Bulk CS Foliar) and compared to commercial urea. Both the Nano CS Foliar fertilizer and the Bulk CS Foliar fertilizer contain the same ingredients, but the Nano CS Foliar fertilizers have nano sized particles (20 to 150 nm) while the Bulk CS Foliar fertilizers have micro sized particles in the micron range. The amount of nitrogen applied to the crops by spraying the fertilizers onto the crops is indicated (e.g., 500 ppm). Nano CS Foliar fertilizer shows growth improvements over Bulk CS Foliar as seen in Table 2. Improvements in all of number of seeds per cob (# Seeds/Cob), grain yield per plot (Grain Yield/Plot), and stover yield per plot (Stover Yield/Plot). Improvement is even seen when 1/6^{th} the concentration of nitrogen is used in the Nano CS Foliar fertilizer compared to the Bulk CS Foliar fertilizer (compare Nano CS Foliar - 250 ppm with Bulk CS Foliar -1500 ppm).

**Table 2**

| **Formulation** | **# Seeds/Cob** | **Grain Yield/Plot** | **Stover Yield/plot** |
|---|---|---|---|
| Urea | 388.2 | 17.11 | 27.04 |
| Bulk CS Foliar -500 ppm | 494.2 | 22.82 | 37.2 |
| Nano CS Foliar -250 ppm | 514.2 | 24.83 | 39.23 |
| Bulk CS Foliar -1500 ppm | 500.8 | 22.62 | 37.32 |
| Nano CS Foliar -750 ppm | 518.4 | 26.11 | 41.77 |

### Example 4

### Greenhouse trail study on Marigold crop and growth improvements

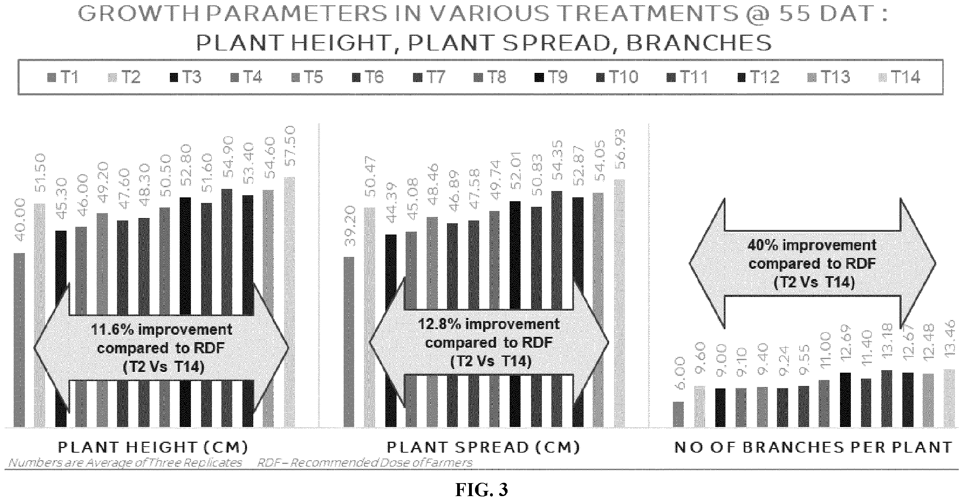

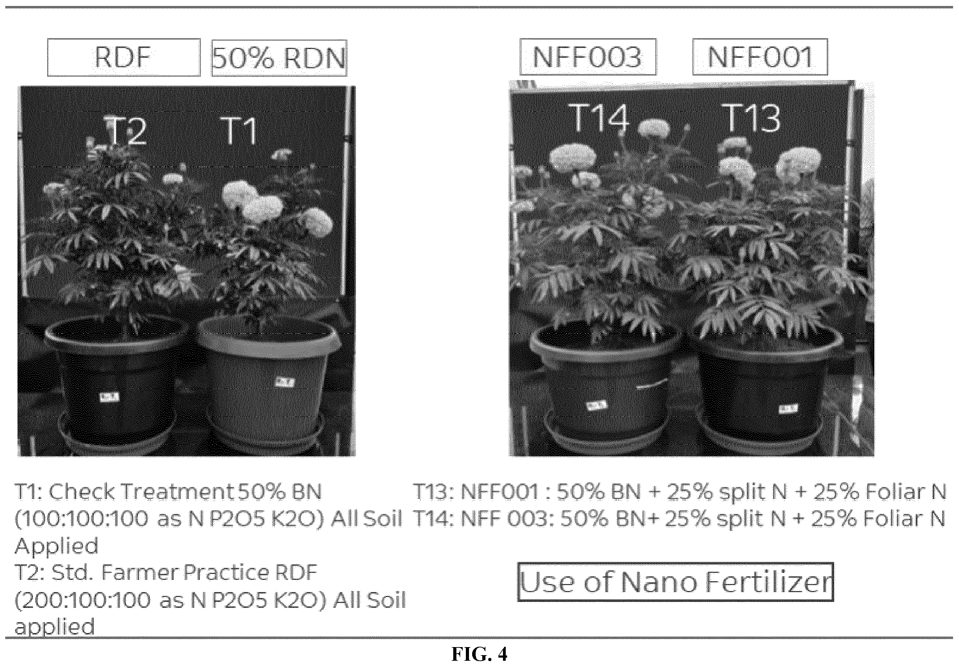

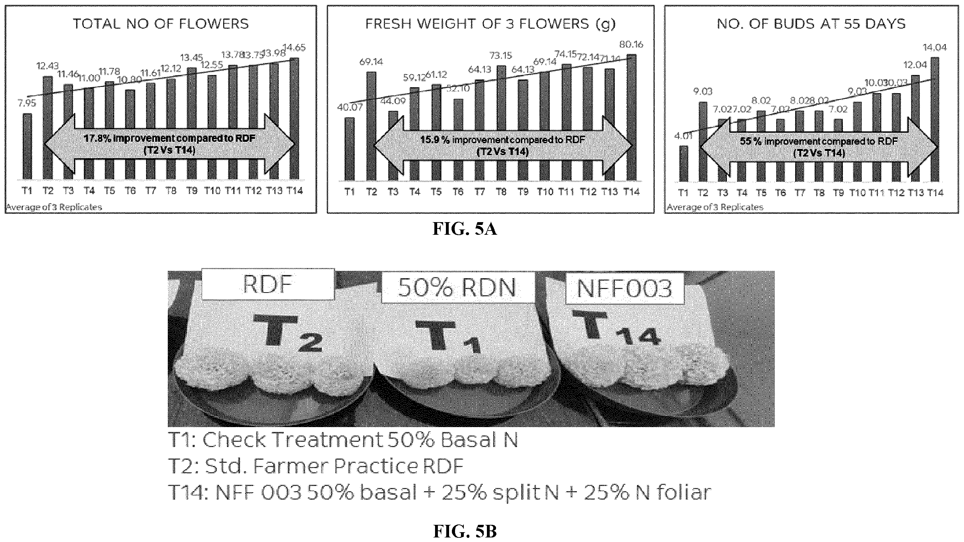

Greenhouse studies were performed with Marigold crops using a chitosan based nano fertilizer of Example 1, where less nitrogen was applied (50% less nitrogen in T3 to T8 and 25% less nitrogen in T9 to T14 samples) compared to the standard farmer practice (RDF, 250:75:75 as N:P₂O₅:K₂O). Despite the lower amount of nitrogen applied, plant height improved 11.6% (Treatment T₁₄) with application of the nanoparticle fertilizer (SABIC^{™} nano urea enriched with micronutrients and gibberellic acid as a biostimulant) compared to standard farmer practice (RDF) of bulk urea (Treatment T₂). Similar to plant height, the plant spread improved 12.8%, the number of branches per plant improved 40%, the total number of flowers improved 17.8%, average fresh weight of three flowers improved 15.9 %, and the number of buds at 55 days improved 55 % compared to RDF. Thus, improved growth parameters were observed even with 25% less nitrogen fertilizer applied. See FIGs. 3-5 and Table 3.

**Table 3**

| | |
|---|---|
| T₁ | Positive control treatment (50 % basal N ) |
| T₂ | standard practice or RDF |
| T₃ | 50 % basal N (RDF) + 50% N through IFFCO^{™} nano urea (foliar) |
| T₄ | 50 % basal N (RDF) + 50% N through bulk urea 160 ppm (foliar) |
| T₅ | 50 % basal N + 50% N through SABIC^{™} nano urea (foliar) |
| T₆ | 50 % basal N + 50% N through SABIC^{™} nano NPK (foliar) |
| T₇ | 50 % basal N+ 50% N through SABIC^{™} nano urea enriched (foliar) |
| T₈ | 50 % basal N + 50% N through SABIC^{™} nano urea enriched + biostimulant (foliar) |
| T₉ | 50 % basal N + 25% N of split application through urea + 25 % N through split application of IFFCO^{™} nano urea (foliar) |
| T₁₀ | 50 % basal N + 25% N of split application through urea + 25% N through split application of bulk urea 160 ppm (foliar) |
| T₁₁ | 50 % basal N+ 25% N of split application through granulated urea + 25% through SABIC^{™} nano urea (foliar) |
| T₁₂ | 50 % basal N + 25% N of split application through granulated urea + 25% through SABIC^{™} nano NPK (foliar) |
| T₁₃ | 50 % basal N+ 25% N of split application through granulated urea + 25% through SABIC^{™} nano urea enriched (foliar) |
| T₁₄ | 50 % basal N + 25% N of split application through urea + 25% through SABIC^{™} nano urea enriched + biostimulant (foliar) |

### Example 5

### Open field trail study on Maize crop and yield improvements

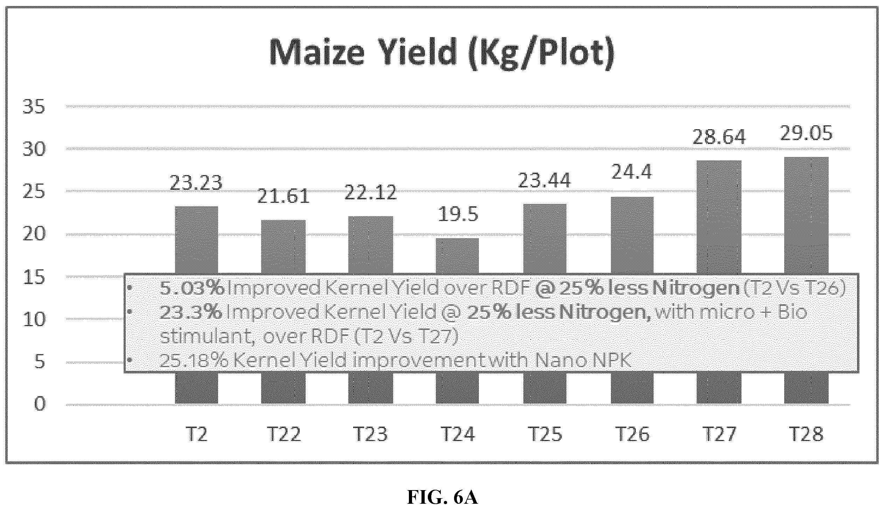

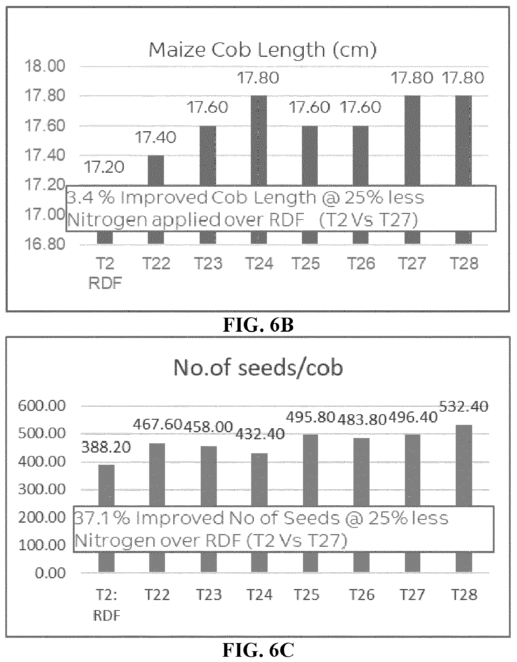

Open field trails were performed on maize crop using a chitosan based nano fertilizer of Example 1. A 5.03% improvement was seen in kernel yield (Yield) observed over RDF even with 25% less nitrogen was applied as nano sized urea (T2 Vs T26); a 23.3% improvement was seen for kernel yield over RDF (T2 Vs T27) when 25% less nitrogen was applied with micro nutrients and biostimulant over RDF; and a 25.18% kernel yield improvement was seen when nano NPK was applied over RDF (T2 Vs T28). See FIG. 6A. 3.4 % improvement was seen in cob length (Cob length) over RDF (T2 Vs T27), and a 37.1 % improvement in the number of seeds over RDF (T2 Vs T27) was seen. See FIGS 6A-C and Tables 4 and 5.

**Table 4**

| **T. No.** | **Treatment Description** | **Dose 1 Description** | **Dose 2 Description** | **Dose 3 Description** | **Yield (Kg/Plot)** |
|---|---|---|---|---|---|
| T₂ | RDF with Foliar spray | 50% basal dose of N | 25% first split application + water spray | 25% second split application + water spray | 23.23 |
| T₂₂ | For Nitrogen source, SABIC urea - basal dose + IFFCO^{™} nano liquid as foliar for 2 split doses | 50% basal dose of N | Only foliar spray @ 160 ppm IFFCO^{™} nano urea product | Only foliar spray @ 160 ppm IFFCO^{™} nano urea product | 21.61 |
| T₂₃ | For Nitrogen, source SABIC^{™} urea - basal dose + SABIC^{™} nano liquid as foliar for 2 split doses | 50% basal dose of N | Only foliar spray @ 160 ppm SABIC^{™} nano urea product | Only foliar spray @ 160 ppm SABIC^{™} nano urea product | 22.12 |
| T₂₄ | For Nitrogen, source SABIC^{™} urea - basal dose + SABIC^{™} nano liquid as foliar for 2 split doses | 50% basal dose of N | Only foliar spray @ 160 ppm SABIC^{™} nano urea product + micro nutrients+ biostimulant | Only foliar spray @ 160 ppm SABIC^{™} nano urea product + micro nutrients+ biostimulant | 19.50 |
| T₂₅ | For Nitrogen, source SABIC^{™} urea - basal dose + 2 split as detailed in Fertilizer Application Details + IFFCO^{™} nano liquid as foliar for 2 split doses | 50% basal dose of N | 12.5 % first split application gr. Urea + foliar spray @ 160 ppm IFFCO^{™} nano urea product | 12.5 % second split application gr. Urea + foliar spray @ 160 ppm IFFCO^{™} nano urea product | 23.44 |
| T₂₆ | For Nitrogen, source SABIC^{™} urea - basal dose + 2 split as detailed in Fertilizer Application Details + SABIC^{™} nano liquid as foliar for 2 split doses | 50% basal dose of N | 12.5 % first split application + foliar spray @ 160 ppm SABIC^{™} nano urea product | 12.5 % second split application + foliar spray @ 160 ppm SABIC^{™} nano urea product | 24.40 |
| T₂₇ | For Nitrogen, source SABIC^{™} urea - basal dose + 2 split as detailed in Fertilizer Application Details + SABIC^{™} nano Urea + MN+BS as foliar for 2 split doses | 50% basal dose of N | 12.5 % first split application + foliar spray @ 160 ppm SABIC^{™} nano urea product + micro nutrients+ biostimulant | 12.5 % second split application + foliar spray @ 160 ppm SABIC^{™} nano urea product + micro nutrients+ biostimulant | 28.64 |
| T₂₈ | For Nitrogen, source SABIC^{™} urea - basal dose + 2 split as detailed in Fertilizer Application Details + SABIC^{™} nano liquid as foliar for 2 split doses | 50% basal dose of N | 12.5 % first split application foliar spray @ 160 ppm SABIC^{™} nano NPK | 12.5 % second split application foliar spray @ 160 ppm SABIC^{™} nano NPK | 29.05 |

**Table 5**

| |
|---|
| T2 : RDF (250:75:75 as N:P₂O₅: K₂O) applied as Basel 50% + two splits 25%+25% all Soil |
| (T22): 50 % basal N + 50% N through IFFCO^{™} Nano urea (foliar) |
| (T23): 50 % basal N + 50% N through SABIC^{™} Nano urea (foliar) |
| T4 (T24): 50 % basal N + 50% N through SABIC^{™} Nano Urea Micro Nutrient enriched with Biostimulant (foliar) |
| (T25): 50 % basal N + 25% N of split application through solid urea (Soil) + 25% N through split application of IIFCO^{™} Nano urea (foliar) |
| (T26) :50 % basal N+ 25% N of split application through solid urea (Soil) + foliar spray at 160 ppm through SABIC^{™} Nano Urea (foliar) |
| (T27): 50 % basal N+ 25% N of split application through solid urea (Soil) + foliar spray at 160 ppm through SABIC^{™} Nano Urea with micro nutrient enriched with biostimulant (foliar) |
| (T28):standard practice or RDF + NPK Nano foliar spray two splits 25%+25% |

### Example 6

### Concentration tolerance

The chitosan based nano fertilizer of Example 1 was foliar sprayed at different concentration on Gazania plants to study concentration effectiveness at 30000 ppm, 40000 ppm, and 50000 ppm nitrogen concentration. Also, a further dilution of 4 ml per liter of each of those concentrations mentioned above were tested so that each plant received an average of 10 ml per plant of foliar solution. Spray was carried out twice with a 15 day time interval between each spray. No harmful effects were noticed for any of the concentrations tested.

## Claims

1. A nanoparticle comprising:
(a) a nitrogen fertilizer;
(b) a micronutrient comprising Cu, Mn, Si, K; and
(c) at least one carrier, wherein the nitrogen fertilizer and the micronutrients are embedded in the at least one carrier.

2. The nanoparticle of claim 1, wherein the at least one carrier comprises chitosan, crosslinked chitosan, a gum, a carbohydrate, and/or inorganic nano porous materials.

3. The nanoparticle of claim 2, wherein:
the at least one carrier comprises chitosan crosslinked with tripolyphosphate (TPP); or
the inorganic nano porous material comprises zeolite, biochar, hydroxyapatite, and/or combinations thereof.

4. The nanoparticle of any one of claims 1 to 3, wherein the micro-nutrients further comprise boron, chlorine, iron, molybdenum, silicate, zinc and/or combinations thereof.

5. The nanoparticle of any one of claims 1 to 4, wherein the nitrogen fertilizer comprises urea.

6. The nanoparticle of one of claims 1 to 5, further comprising a plant growth promoter, phosphorous, potassium, or combinations thereof, optionally wherein the plant growth promoter comprises enzymes, seaweed extracts, plant extracts, proteins, amino acids, micro-organisms, innoculants, bio-innoculants, salicylic acid, humic acids, bio-stimulants, plant growth hormones, fulvic acids, protein hydrolases, or combinations thereof.

7. The nanoparticle of any one of claims 1 to 6, wherein diameter size of the nanoparticle is less than 300 nanometers, optionally wherein diameter size of the nanoparticle is 25 to 150 nanometers.

8. The nanoparticle of any one of claims 1 to 7, wherein the nanoparticle fertilizer is comprised in a solution, optionally wherein diameter size of the nanoparticle in the solution is 25 to 300 nanometers.

9. The nanoparticle of any one of claims 1 to 8, further comprising a surfactant

10. A method of making a nanoparticle of any one of claims 1 to 9, the method comprising:
combining the nitrogen fertilizer, the micronutrient, and the at least the one carrier in an aqueous solution; and
stirring to form the nanoparticle.

11. The method of claim 10, further comprising reducing the volume of the aqueous solution to form a product nanoparticle.

12. The method of any one of claims 10 to 11, further comprising crosslinking the at least one carrier in the presence of the nitrogen fertilizer and the micronutrient.

13. The method of any one of claims 10 to 12, wherein the method forms a nanoparticle at least partially encapsulating the nitrogen fertilizer and the micronutrient with the at least one carrier.

14. A method of fertilizing, the method comprising contacting a soil, a plant, or a soil and a plant with the nanoparticle of any one of claims 1 to 13.

15. The method of fertilizing of claim 14, wherein:
the nanoparticle is sprayed on the soil, the plant, or the soil and the plant; and/or
the nanoparticle is added to water before contacting the soil, plant, or soil and plant.
